# EUROPEAN PATENT APPLICATION

(11) **EP 3 001 260 A2**
(43) Date of publication of application: **30.03.2016**
(21) Application number: 15186116.8
(22) Date of filing: 21.09.2015
(51) Int. Cl.: G05B 15/02

(54) **COMMISSIONING HVAC DEVICE WITH OPTICAL COMMUNICATION**

(30) Priority: 23.09.2014 US 201414494357
(71) Applicant: Schneider Electric Buildings, LLC, Palatine, IL 60067-7399 (US)
(72) Inventor: ROBERTS, William R., Nashua, NH New Hampshire 02051 US (US); KERR, John R., Eliot, ME Maine 03903 US (US); LUNG, Hsi-Hao, Nashua, NH New Hampshire 03062 US (US); RUDIS, Robert M., Salem, NH New Hampshire 03079 US (US)
(74) Representative: Zerbi, Guido Maria

(57) **Abstract**

A method of commissioning an electronic building system controller includes presenting a static visual code to a camera of the electronic building system controller. The electronic building system controller extracts information from the static visual code and reconfigures internal programming responsive to extracting the information.

## Description

### BACKGROUND

### 1. Field of Invention

Aspects and embodiments of the present disclosure are directed to systems and methods for commissioning electronic building system controllers, for example, heating, ventilation, and air conditioning (HVAC) controllers.

### 2. Discussion of Related Art

In modem buildings, for example, office buildings or retail buildings, electronic building system controllers, for example, thermostats or other controllers associated with HVAC systems of the buildings are often networked to a central building management system. The building system controllers may be programmed utilizing commands sent from the central building management system to each individual controller.

### SUMMARY

In accordance with an aspect of the present disclosure, there is provided a method of commissioning an electronic building system controller. The method comprises reading a static visual code with a camera of the electronic building system controller, extracting information from the static visual code using a processor of the electronic building system controller, and configuring internal programming of the electronic building system controller responsive to extracting the information.

In some embodiments, reading the static visual code with the camera of the electronic building system controller comprises reading one of a bar code and a matrix code with the camera of the electronic building system controller.

In some embodiments, the method further comprises activating the camera prior to presenting the static visual code to the camera.

In some embodiments, the method further comprises reading a static visual code presented on a display of the electronic building system controller. Reading the static visual code presented on the display of the electronic building system controller may comprise reading the static visual code presented on the display of the electronic building system controller with a camera of a portable computing device.

In some embodiments, reading the static visual code causes the electronic building system controller to activate one of a plurality of pre-programmed applications in a memory of the electronic building system controller, the one of the plurality of pre-programmed applications associated with the information.

In some embodiments, the method further comprises generating the static visual code based, at least in part, on location information associated with the electronic building system controller. Generating the static visual code may include bringing a portable computing device proximate the electronic building system controller, determining a location of the electronic building system controller with the portable computing device, and generating the static visual code with the portable computing device.

In accordance with another aspect, there is provided an electronic building system controller. The electronic building system controller comprises a body, a camera disposed on the body, and a display disposed on the body. The electronic building system controller is configured to read information from a static visual code with the camera and to configure internal programming of the electronic building system controller responsive to reading the information.

In some embodiments, the electronic building system controller further comprises a network interface, and the electronic building system controller may be configured to be commissioned by reading the information from the static visual code in the absence of any network connection being established through the network interface.

In some embodiments, the electronic building system controller further comprises an actuator configured to toggle the camera between an active mode and a standby mode.

In some embodiments, the camera is configured to continuously scan for a static visual code.

In some embodiments, the electronic building system controller is configured to output information in the form of a static visual code in the display.

In some embodiments, the electronic building system controller comprises a HVAC system controller.

In some embodiments, the electronic building system controller is configured to generate an acknowledgement signal responsive to a successful reading of a static visual code by the electronic building system controller.

In accordance with another aspect, there is provided a portable computing device. The portable computing device comprises a display screen and a camera. The portable computing device is configured to display a static visual code encoding commands for an electronic building controller on the display screen, to read a response code from a display of the electronic building controller with the camera, and to extract status information regarding the electronic building controller from the response code.

In some embodiments, the portable computing device is included in a building management system comprising a plurality of electronic building system controllers. Each of the plurality of electronic building system controllers may include a body and a camera disposed on the body. Each of the plurality of electronic building system controllers may be configured to be commissioned by reading a static visual code with the camera of each of the respective plurality of electronic building system controllers.

In some embodiments, the building management system further comprises a central building management system controller and a network configured to provide communications between the central building management system controller and the plurality of electronic building system controllers. The plurality of electronic building system controllers may be configured to be commissioned by being presented with the static visual codes prior to establishing a network connection with the central building management system controller.

In some embodiments, functionality of the plurality of electronic building system controllers to receive commands by reading static visual codes with the cameras of the plurality of electronic building system controllers is disabled responsive to a network connection with the central building management system controller being established.

In some embodiments, a command input to the plurality of electronic building system controllers by reading the static visual code overrides a command sent over the network to the plurality of electronic building system controllers by the central building management system controller.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is an illustration of an embodiment of an electronic building system controller;
FIG. 2 is an illustration of an electronic building system controller reading a code from a portable computing device;
FIG. 3 is an illustration of a booklet including a plurality of codes;
FIG. 4 is an illustration of a portable electronic device reading a code from an electronic building system controller;
FIG. 5 is a flow chart of an embodiment of a method for commissioning an electronic building system controller;
FIG. 6 is a flow chart of another embodiment of a method for commissioning an electronic building system controller;
FIG. 7 is an illustration of an embodiment of a building management system;
FIG. 8 is a block diagram of a computer system included in embodiments of an electronic building system controller; and
FIG. 9 is a block diagram of a memory system of the computer system of FIG. 8.

### DETAILED DESCRIPTION

This disclosure is not limited in its application to the details of construction and the arrangement of components set forth in the following description or illustrated in the drawings. The disclosed systems and methods are capable of other embodiments and of being practiced or of being carried out in various ways. Also, the phraseology and terminology used herein is for the purpose of description and should not be regarded as limiting. The use of "including," "comprising," "having," "containing," "involving," and variations thereof herein is meant to encompass the items listed thereafter and equivalents thereof as well as additional items.

Various aspects and embodiments disclosed herein include systems and methods for commissioning electronic building system controllers. The electronic building system controllers may include, for example, HVAC system controllers, including, but not limited to thermostats and variable air volume (VAV) controllers. The electronic building system controllers may also or alternatively include, for example, lighting system controllers, various components of security systems, components of fire alarm systems, and/or other building system controllers. Commissioning electronic building system controllers may include, for example, initializing the controllers, enabling network communication with the controllers, for example, by assigning IP addresses to the controllers, programming the controllers, activating the controllers, and upgrading the firmware of the controllers.

In many implementations, electronic building system controllers are configured to be networked to a central building management system controller. The electronic building system controllers may rely on the central building management system controller to program, activate, or otherwise commission the electronic building system controllers. The electronic building system controllers may require a network connection to the building management system to be established prior to commissioning of the electronic building system controllers. Thus, in some implementations, network configured electronic building system controllers may not be programmed or activated until buildout of a network connecting the electronic building system controllers to the building management system is completed. The inability to commission the network configured electronic building system controllers prior to completion of the network connecting the electronic building system controllers to the building management system may cause inconvenience by preventing operation of an HVAC or other building system for the comfort or safety of building construction workers or for persons who desire to work in otherwise completed portions of the building under construction.

Methods of commissioning network configured electronic building system controllers from a central building management system may suffer from additional disadvantages including, for example, high cost and high complexity, and may be susceptible to various errors. For example, to correctly program different electronic building system controllers located in different portions in a building from a centralized building management system, one must have an accurate map of what controllers are located where. For example, in implementations where the electronic building system controllers are provided with pre-programmed IP addresses, one must know the IP addresses of each of the controllers and know where a controller with each particular IP address is located so that the commands appropriate for commissioning a controller in a particular location may be sent to the controller. In implementations where the electronic building system controllers are provided without pre-programmed IP addresses, and commissioning of the controllers includes programming the controllers with individual IP addresses, one must know how signals are routed through the network so that the desired commands are sent to the desired controllers to program them with the desired IP addresses. Often, to ensure that the electronic building system controllers throughout a building have been properly commissioned, manual inspection of the various controllers may be required to check that the appropriate programming has been sent to each controller. This inspection may be time consuming and costly, and may also be prone to user error if the person inspecting the electronic building system controllers has inaccurate information about how each should be configured or misidentifies one or more of the controllers being inspected.

Aspects and embodiments of the present disclosure provide an alternative method for the installation, commissioning, and upkeep of a building automation system that may mitigate or eliminate one or more of the problems associated with the commissioning of network configured electronic building system controllers from a central building management system. Aspects and embodiments disclosed herein may reduce the installation time, effort, and cost of a building automation system. Aspects and embodiments disclosed herein may provide a building manager with a quick, easy, and error-resistant method of upgrading firmware, enabling product features, configuring, and programming electronic building system controllers.

In some embodiments, an electronic building system controller may be provided with a camera and may be configured to read and execute commands and/or reconfigure the software or firmware of the controller responsive to extracting information from a visual representation of the information presented to the camera. The visual representation may include, for example, a one dimensional (1D) Universal Product Code (UPC) barcode, and/or a two dimensional (2D) matrix barcode, for example, a Quick Response Code (QR code) barcode. Other visual representations of data, for example, an Aztek Code, a CrontoSign, a Data Matrix, a MaxiCode, a SPARQCode and/or a PDF417 barcode may alternatively or additionally be utilized in various embodiments. Aspects and embodiments disclosed herein are not limited to any particular forms of visual representations of data. A visual representation of data, for example, a barcode and/or matrix code may be referred to herein as simply a "code." The code may be a static code, for example a code which may be printed or displayed on a display of an electronic device. A visual "static code" as the term is used herein excludes codes presented as a series of pulses or other forms of temporal modulation of optical radiation, for example, infrared light, for a source of optical radiation. The term "visual" as used herein refers to being optically ascertainable by the unaided human eye.

In some embodiments, an electronic building system controller may be pre-programmed with a set of built-in software or firmware applications prior to installation in a building. Presenting a specific code to the electronic building system controller will activate a particular software or firmware application in the electronic building system controller. In such embodiments, there is no need to pre-select a particular application prior to delivery or installation of the electronic building system controller. Generic electronic building system controllers may be installed in various locations throughout a building and the desired application subsequently activated based on the location and purpose of each individual electronic building system controller.

Some aspects and embodiments disclosed herein include a system and method for commissioning and programming an HVAC control device using optical communication. In one example, a system comprises an HVAC control device (for example, a thermostat or VAV room controller) with an integrated camera and software capable of decoding 2D matrix codes (for example, QR codes). Matrix codes or other visual or optical signals are generated and used to perform basic configuration, commissioning, and programming of the device. This configuration uses the camera or other optical receiver as the communication port into the device.

Aspects and embodiments disclosed herein allow a human operator or technician who is installing and commissioning the HVAC system to configure an electronic building system controller in a time efficient way, without the need for network communication infrastructure to have been installed and configured. The technician may commission, program, upgrade, and run diagnostics on the electronic building system controller prior to establishing a network connection to the electronic building system controller or even assigning an IP address to the electronic building system controller. The technician may select a built-in application in the electronic building system controller, and may input parameters such as set points or control constants.

Using a portable computing device, for example, a smart phone, location information derived from Global Positioning System (GPS) signals or other location services may be applied to the electronic building system controller through a dynamically generated matrix code or other visual code. Mobile internet (cellular data) can provide access to licensing information which can then be used to generate specific license based matrix codes or visual codes. This internet access can facilitate the execution of other applications such as remote upgrades of the electronic building system controller or pushing customer data from the electronic building system controller to cloud based services.

In some embodiments, a method of commissioning an electronic building system controller includes providing feedback from the electronic building system controller to the operator. Lights or sounds can be incorporated to acknowledge receipt of a visual code or of proper extraction of information or commands from the visual code. The electronic building system controller may also include a bar code and/or matrix code display, and may generate bar codes and/or matrix codes to be read by a technician, for example, using the technician's portable computing device. In this way command results (such as a self-test report) can be transmitted back from the electronic building system controller, for example, to a portable computing device, before a network infrastructure for the electronic building system controller has been installed and configured.

Methods of commissioning and communicating with an electronic building system controller using optical communications may provide advantages over other methods. For example, methods of programming an electronic building system controller by manually setting DIP switches or jumpers in the electronic building system controller may be time consuming and subject to operator error. Wirelessly programming an electronic building system controller using, for example, Bluetooth® or ZigBee wireless communication standards may require that the electronic building system controller be pre-programmed with an IP address. Methods of commissioning and communicating with an electronic building system controller using visual codes may dispense with the need for specialized equipment to commission and/or communicate with the electronic building system controller. A technician may use a smart phone capable of displaying and reading bar codes and/or matrix codes, for example, an Apple iPhone® or a Samsung Galaxy® smart phone to commission and/or communicate with an electronic building system controller.

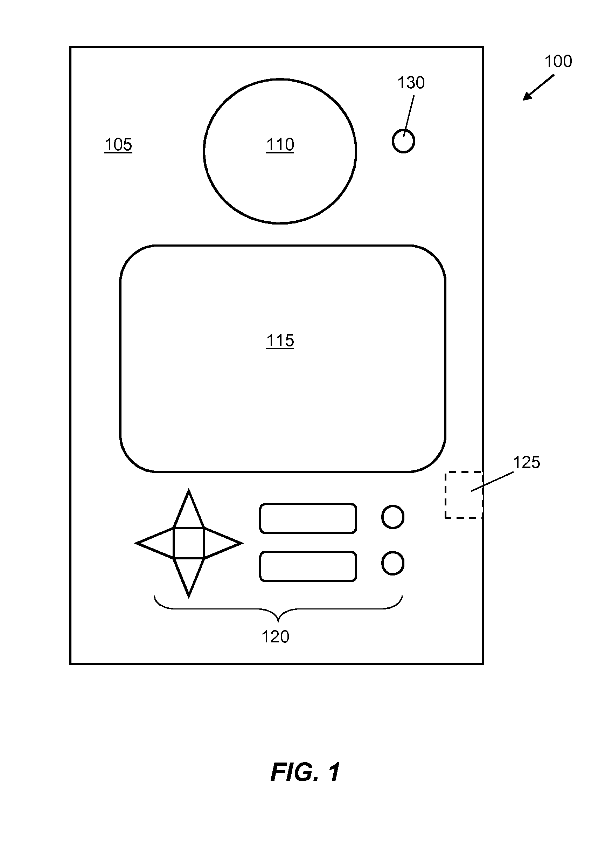

An embodiment of an electronic building system controller is illustrated generally at 100 in FIG. 1. The electronic building system controller 100 includes a body 105. Mounted on the body 105 are a camera 110 and a display screen 115. The camera 110 may be configured to recognize bar codes and/or matrix codes and the electronic building system controller 100 may include software or firmware to interpret codes read by the camera. The camera 110 may be passive and/or may include an active component, for example, a laser scanner. The camera 110 may include any form of optical sensor known in the art capable of reading codes and the term "camera" as used herein encompasses any one or more of these optical sensors.

The display screen 115 may be a touch screen through which commands may be entered into the electronic building system controller 100. Alternatively or additionally, the electronic building system controller 100 may include manually activatable buttons 120 or other input mechanisms for enabling communication with the electronic building system controller 100. The electronic building system controller 100 may further include a network interface 125, for example, an Ethernet port or other form of network interface. The electronic building system controller 100 may be powered by a connection to mains power (not shown) and/or may include an internal power source or backup power source, for example, a battery.

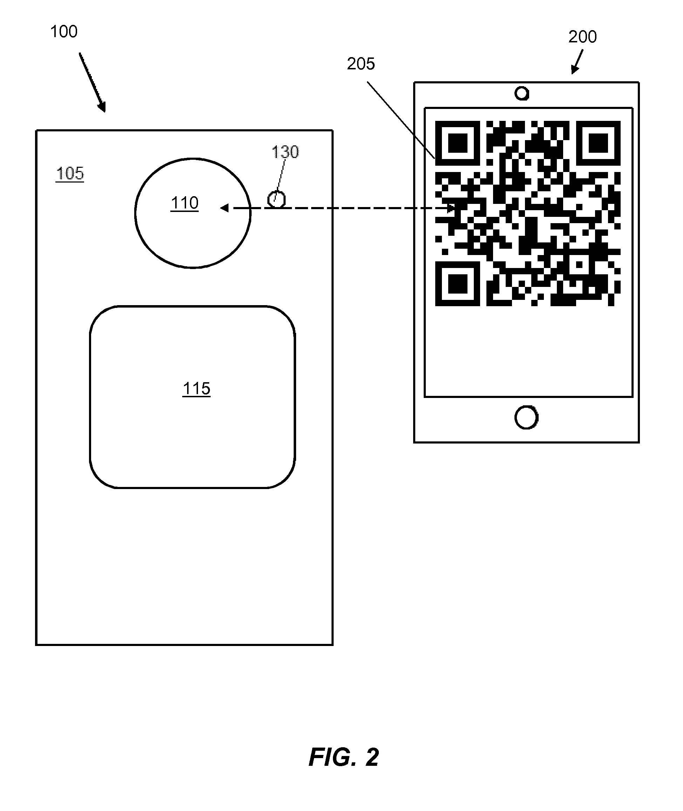

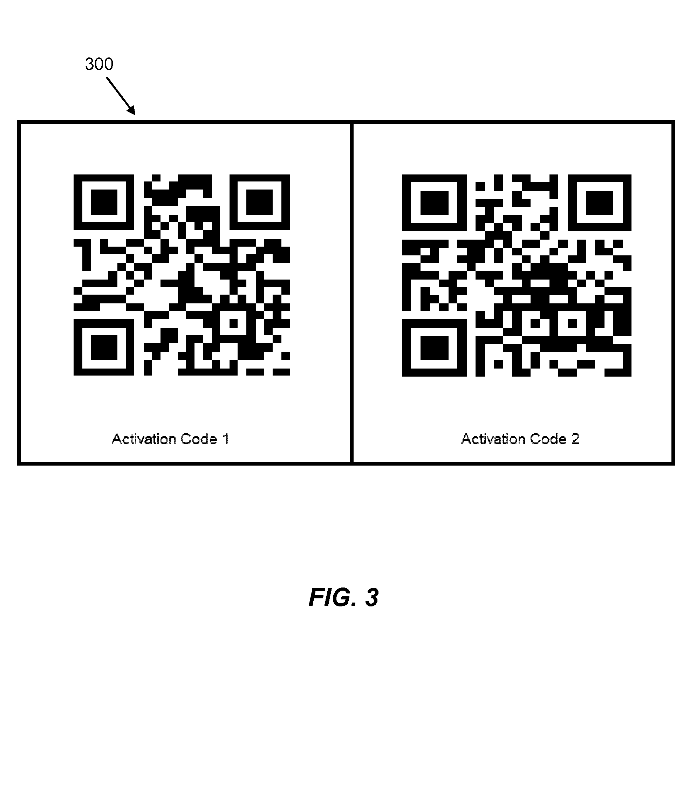

To commission or otherwise optically communicate with the electronic building system controller 100, a technician may present the camera 110 with a bar code and/or matrix code or some other form of optically recognizable code encoding information to be read by the electronic building system controller 100. As illustrated in FIG. 2, the code may be presented on a screen 205 of a smart phone 200 or other portable computing device. Alternatively, a technician may present the camera 110 with one or more codes printed on paper, for example, included in a code booklet 300 (FIG. 3). In some embodiments, a button 130 or other actuator may be pressed or activated to set the camera 110 in a "receive" mode so that it will read a code presented to it. After a technician is finished communicating with the electronic building system controller 100 the button 130 may be pressed again to put the camera in a "standby" mode. In some embodiments, the camera 110 may enter a "standby" mode if not presented with any new codes within a predefined time limit. In other embodiments, the camera 110 may continuously scan for a code entering its visual field and may not required to be set into a "receive" mode to read a code presented to it.

Upon successfully reading the code presented to the camera 110, the electronic building system controller 100 may generate a confirmation signal, for example, a beep or a visual indication on the display screen 115 so a technician knows that the code was properly read by the electronic building system controller 100.

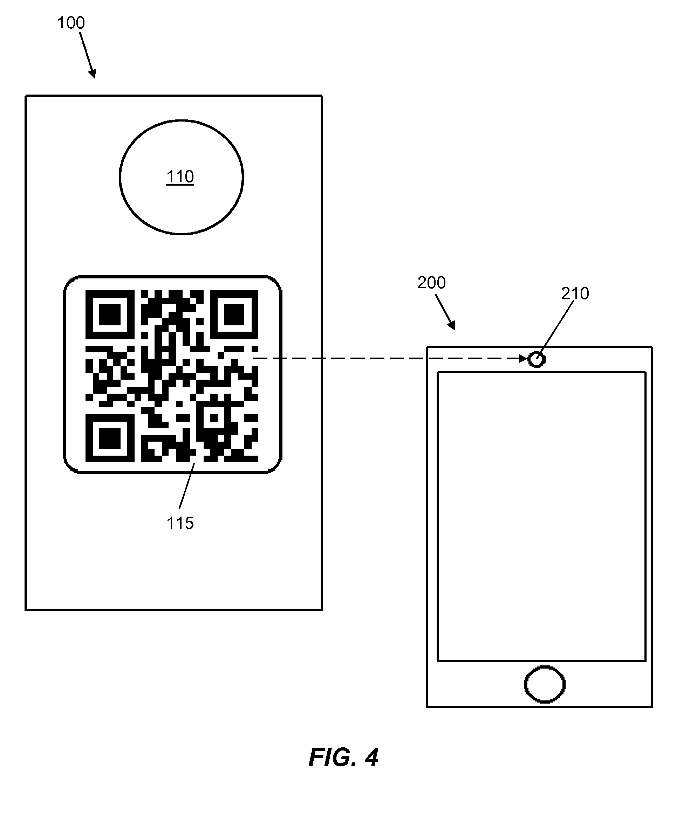

In some embodiments or instances a technician may desire feedback from the electronic building system controller 100, for example, when querying the electronic building system controller 100 for information on its configuration or settings or when commanding the electronic building system controller 100 to perform a self test and querying the electronic building system controller 100 for the results of the test. The electronic building system controller 100 may present feedback to the technician as a code on the display screen 115 which may be read by a camera 210 of the technician's mobile computing device (FIG. 4).

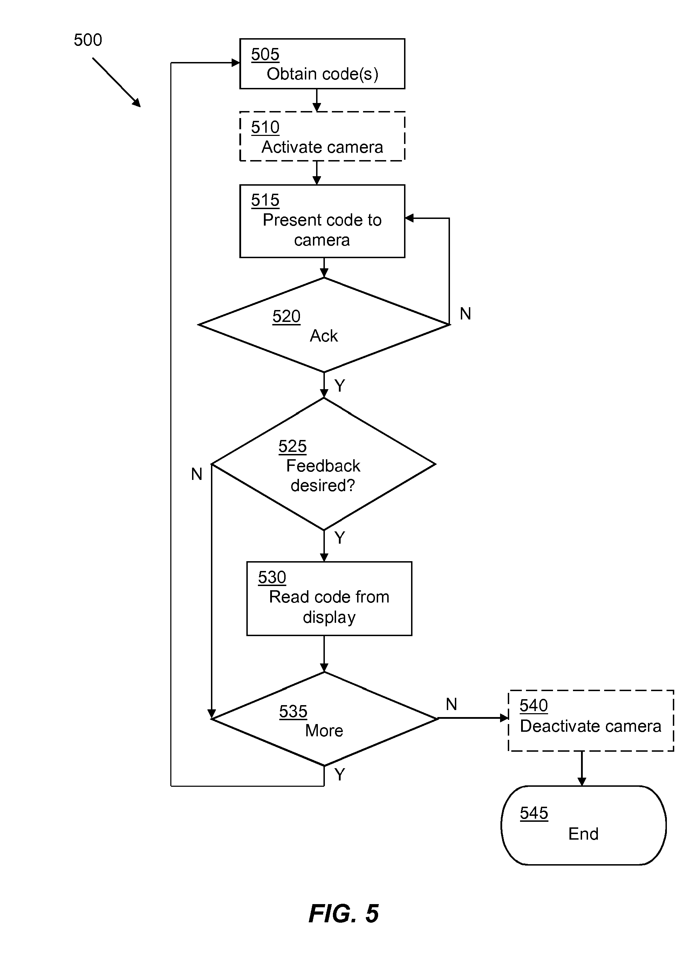

A method 500 of commissioning or otherwise optically communicating with an electronic building system controller 100 is shown in the flowchart of FIG. 5. In act 505 of the method, a technician obtains one or more codes to be used for commissioning or otherwise programming or communicating with the electronic building system controller 100. The codes may be downloaded onto a portable computing device, for example, a smart phone, printed onto a piece of paper, provided in a code book, or otherwise obtained. In some embodiments, a code may include location information, for example, GPS coordinates associated with the location of the electronic building system controller 100. A technician may use a portable computing device to obtain the location information when located at or near the electronic building system controller 100 and generate or modify a code to be presented to the electronic building system controller 100 using software running on the portable computing device. The location information may be obtained by a GPS receiver in the portable computing device.

In act 510, a camera or other optical sensor of the electronic building system controller 100 is set to a "receive" or "active" mode, for example, by pressing a button or otherwise providing an activate signal to the electronic building system controller 100. This act may be omitted in embodiments where the camera of the electronic building system controller 100 constantly scans for codes to read.

In act 515, the technician presents the code obtained in act 505 to the camera of the electronic building system controller 100. The camera reads the code and may present an acknowledgement signal, for example, a beep or an optical indication upon successfully reading the code. The technician may wait for the acknowledgement signal before proceeding further (act 520).

In act 525, the technician determines whether feedback is required from the electronic building system controller 100. For example, the code provided to the electronic building system controller 100 in act 515 may have been a code requesting information from the electronic building system controller 100 or commanding the electronic building system controller 100 to perform a self test and to report the results of the self test, or to perform a configuration operation and provide an indication of successful completion of the configuration operation. If feedback from the electronic building system controller 100 is desired, the electronic building system controller 100 may present feedback in the form of a code on a display of the electronic building system controller 100. The technician may read the code from the display, for example, using a camera of the portable computing device (act 530).

If no feedback is desired from the electronic building system controller 100, the technician may decide if there are additional codes to present to the electronic building system controller 100, for example, to input further configuration or programming instructions (act 535). If additional codes are to be presented to the electronic building system controller 100, the method returns to act 505 where the additional codes are obtained. If no further codes are to be entered, the technician may deactivate the camera (act 540) if the camera requires deactivation, and the method may terminate in act 545.

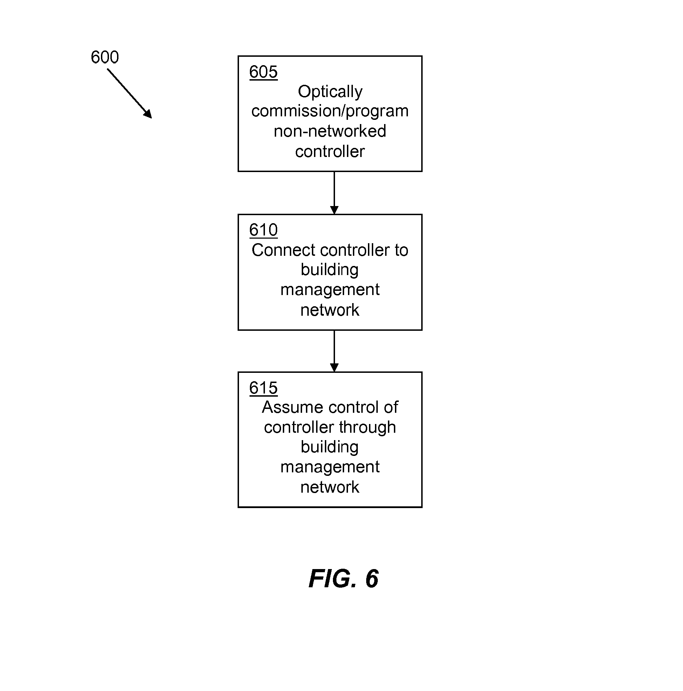

The method of FIG. 5 maybe part of an overall method of commissioning an electronic building system controller 100. An example of an overall method 600 of commissioning an electronic building system controller 100 is presented in FIG. 6. In act 605, the electronic building system controller 100 is not yet attached to a building management system network, and so a technician may commission the electronic building system controller 100 using visual codes as described with reference to the method 500 of FIG. 5. The electronic building system controller 100 may be coupled to a central building management system network in act 610, and the central building management system controller may take over command of the electronic building system controller 100 in act 615.

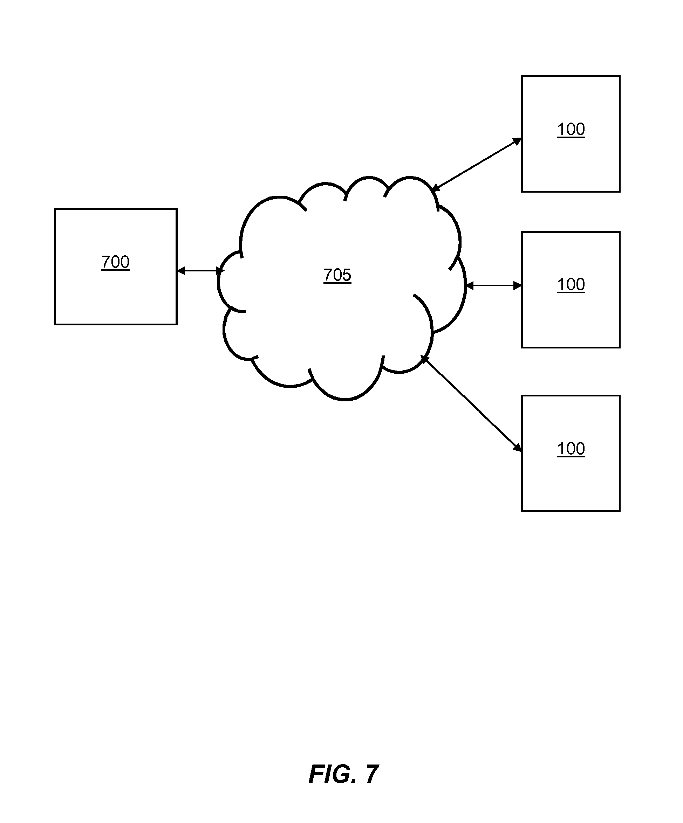

As illustrated in FIG. 7, a single central building management system controller 700 may communicate over a network 705 with multiple electronic building system controllers 100 and control operation or programming of the multiple electronic building system controllers 100 over the network 705. The network may be a local area network (LAN), a wide area network (WAN), the internet, or any other wired or wireless network known in the art.

In some embodiments, a command hierarchy may be established such that commands presented through visual codes to the electronic building system controller 100 may override commands sent by the central building management system controller or alternatively, commands sent by the central building management system controller may override commands presented through visual codes to the electronic building system controller 100. In some embodiments, the establishment of a network connection with the central building management system controller may disable the building system controller 100 from accepting commands presented through visual codes to the electronic building system controller 100. The ability of the electronic building system controller 100 to receive commands presented through visual codes may be re-established, automatically or manually, responsive to failure of the network connection with the central building management system controller.

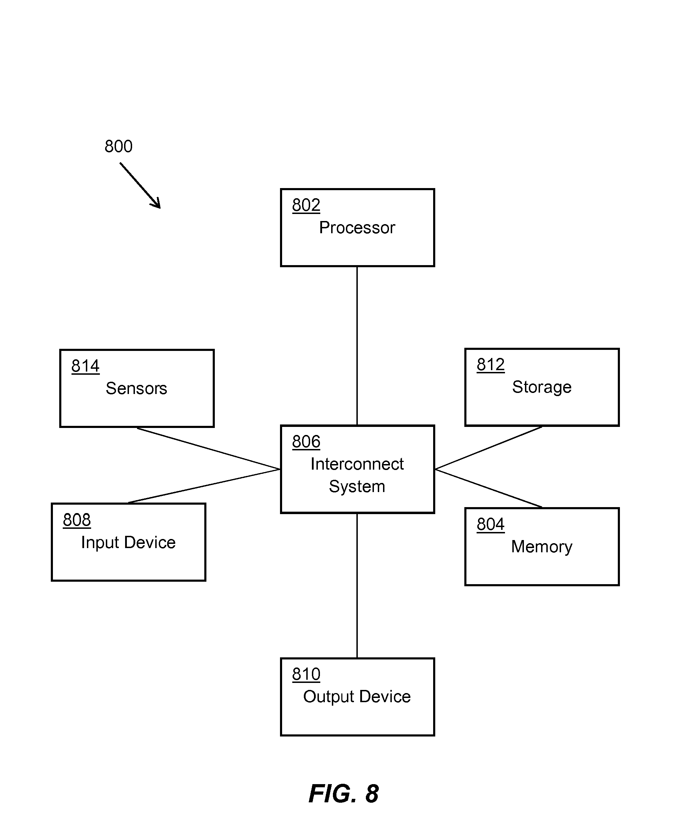

In some embodiments, an electronic building system controller 100 may include a computerized control system. Various aspects may be implemented as specialized software executing in a general-purpose or specialized computer system 800 such as that shown in FIG. 8. The computer system 800 may include a processor 802 connected to one or more memory devices 804, such as a disk drive, solid state memory, or other device for storing data. Memory 804 is typically used for storing programs and data during operation of the computer system 800.

Components of computer system 800 may be coupled by an interconnection mechanism 806, which may include one or more busses (e.g., between components that are integrated within a same machine) and/or a network (e.g., between components that reside on separate discrete machines). The interconnection mechanism 806 enables communications (e.g., data, instructions) to be exchanged between system components of system 800. Computer system 800 includes one or more input devices 808, for example, buttons 120, 130, a keyboard, mouse, trackball, microphone, or display 115 (which may include a touch screen) through which an operator may issue commands or programming to the system 800. Computer system 800 includes one or more output devices 810, for example, a printing device, display 115, and/or a speaker. One or more sensors 814 may also provide input to the computer system 800. These sensors may include, for example, camera 110 or one or more environmental sensors capable of providing information regarding parameters such as temperature, humidity, or air flow to the computer system 800. In addition, computer system 800 may contain one or more interfaces, for example, network interface 125, that connect computer system 800 to a communication network in addition or as an alternative to the interconnection mechanism 806.

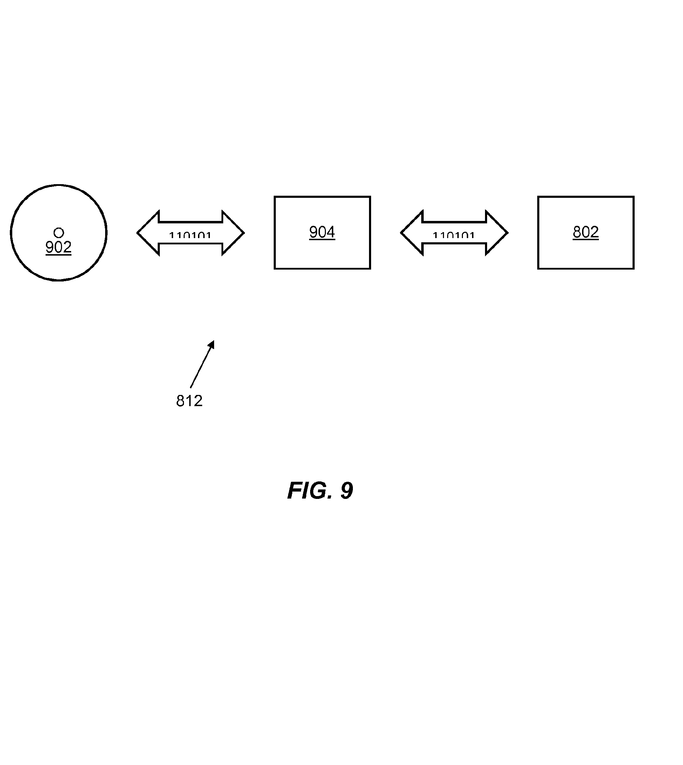

The storage system 812, shown in greater detail in FIG. 9, typically includes a computer readable and writeable nonvolatile recording medium 902 in which signals are stored that define a program to be executed by the processor or information to be processed by the program. The medium may include, for example, a disk or flash memory. Typically, in operation, the processor causes data to be read from the nonvolatile recording medium 902 into another memory 904 that allows for faster access to the information by the processor than does the medium 902. This memory 904 is typically a volatile, random access memory such as a dynamic random access memory (DRAM) or static memory (SRAM). It may be located in storage system 812, as shown, or in memory system 804. The processor 802 generally manipulates the data within the integrated circuit memory 804, 904 and then copies the data to the medium 902 after processing is completed. A variety of mechanisms are known for managing data movement between the medium 902 and the integrated circuit memory element 804, 904, and embodiments disclosed herein are not limited to any particular data movement mechanism. Embodiments disclosed herein are not limited to a particular memory system 804 or storage system 812.

The computer system may include specially-programmed, special-purpose hardware, for example, an application-specific integrated circuit (ASIC). Embodiments disclosed herein may be implemented in software, hardware or firmware, or any combination thereof. Further, such methods, acts, systems, system elements and components thereof may be implemented as part of the computer system described above or as an independent component.

Although computer system 800 is shown by way of example as one type of computer system upon which various embodiments disclosed herein may be practiced, it should be appreciated that the embodiments disclosed herein are not limited to being implemented on the computer system as shown in FIG. 8. Various embodiments disclosed herein may be practiced on one or more computers having a different architecture or components that that shown in FIG. 8.

Computer system 800 may be a general-purpose computer system that is programmable using a high-level computer programming language. Computer system 800 may be also implemented using specially programmed, special purpose hardware. In computer system 800, processor 802 is typically a commercially available processor such as the well-known Pentium^{™} or Core^{™} class processors available from the Intel Corporation. Many other processors are available. Such a processor usually executes an operating system which may be, for example, the Windows 7 or Windows 8 operating system available from the Microsoft Corporation, the MAC OS System X available from Apple Computer, the Solaris Operating System available from Sun Microsystems, or UNIX available from various sources. Many other operating systems may be used.

The processor and operating system together define a computer platform for which application programs in high-level programming languages are written. It should be understood that embodiments disclosed herein are not limited to a particular computer system platform, processor, operating system, or network. Also, it should be apparent to those skilled in the art that the embodiments disclosed herein are not limited to a specific programming language or computer system. Further, it should be appreciated that other appropriate programming languages and other appropriate computer systems could also be used.

One or more portions of the computer system may be distributed across one or more computer systems (not shown) coupled to a communications network. These computer systems also may be general-purpose computer systems. For example, various embodiments disclosed herein may be distributed among one or more computer systems configured to provide a service (e.g., servers) to one or more client computers, or to perform an overall task as part of a distributed system. For example, various embodiments disclosed herein may be performed on a client-server system that includes components distributed among one or more server systems that perform various functions according to various embodiments. These components may be executable, intermediate (e.g., IL) or interpreted (e.g., Java) code which communicate over a communication network (e.g., the Internet) using a communication protocol (e.g., TCP/IP). In some embodiments one or more components of the computer system 600 may communicate with one or more other components over a wireless network, including, for example, a cellular telephone network.

It should be appreciated that embodiments disclosed herein are not limited to executing on any particular system or group of systems. Also, it should be appreciated that embodiments disclosed herein are not limited to any particular distributed architecture, network, or communication protocol. Various embodiments may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various embodiments disclosed herein may be implemented in a non-programmed environment (e.g., documents created in HTML, XML or other format that, when viewed in a window of a browser program, render aspects of a graphical-user interface (GUI) or perform other functions). Various embodiments disclosed herein may be implemented as programmed or non-programmed elements, or any combination thereof.

Having thus described several aspects of at least one embodiment of this invention, it is to be appreciated various alterations, modifications, and improvements will readily occur to those skilled in the art. Any feature described in any embodiment may be included in or substituted for any feature of any other embodiment. Such alterations, modifications, and improvements are intended to be part of this disclosure, and are intended to be within the scope of the invention. Accordingly, the foregoing description and drawings are by way of example only.

## Claims

1. A method of commissioning an electronic building system controller, the method comprising:
reading a static visual code with a camera of the electronic building system controller;
extracting information from the static visual code using a processor of the electronic building system controller; and
configuring internal programming of the electronic building system controller responsive to extracting the information.

2. The method of claim 1, wherein reading the static visual code with the camera of the electronic building system controller comprises reading one of a bar code and a matrix code with the camera of the electronic building system controller.

3. The method of claim 1, further comprising activating the camera prior to presenting the static visual code to the camera.

4. The method of claim 1, further comprising reading a static visual code presented on a display of the electronic building system controller.

5. The method of claim 4, wherein reading the static visual code presented on the display of the electronic building system controller comprises reading the static visual code presented on the display of the electronic building system controller with a camera of a portable computing device.

6. The method of claim 1, wherein reading the static visual code causes the electronic building system controller to activate one of a plurality of pre-programmed applications in a memory of the electronic building system controller, the one of the plurality of pre-programmed applications associated with the information.

7. The method of claim 1, further comprising generating the static visual code based, at least in part, on location information associated with the electronic building system controller.

8. The method of claim 7, wherein generating the static visual code includes:
bringing a portable computing device proximate the electronic building system controller;
determining a location of the electronic building system controller with the portable computing device; and
generating the static visual code with the portable computing device.

9. An electronic building system controller comprising:
a body;
a camera disposed on the body; and
a display disposed on the body;
the electronic building system controller configured to read information from a static visual code with the camera and to configure internal programming of the electronic building system controller responsive to reading the information.

10. The electronic building system controller of claim 9, further comprising a network interface, the electronic building system controller configured to be commissioned by reading the information from the static visual code in the absence of any network connection being established through the network interface.

11. The electronic building system controller of claim 9, further comprising an actuator configured to toggle the camera between an active mode and a standby mode.

12. The electronic building system controller of claim 9, wherein the camera is configured to continuously scan for a static visual code.

13. The electronic building system controller of claim 9, configured to output information in the form of a static visual code in the display.

14. The electronic building system controller of claim 9 wherein functionality of the electronic building system controller to receive commands by reading information from the static visual code with the camera is disabled responsive to a network connection with a central building management system controller being established.

15. The electronic building system controller of claim 9, wherein a command input to the electronic building system controller reading information from the static visual code overrides a command sent over the network to the electronic building system controllers by the central building management system controller.
